# EUROPÄISCHE PATENTSCHRIFT

(11) **EP 1 772 813 B1**
(45) Veröffentlichungstag und Bekanntmachung des Hinweises auf die Patenterteilung: **14.04.2010**
(21) Anmeldenummer: 06121499.5
(22) Anmeldetag: 29.09.2006
(51) Int. Cl.: G06K 7/00

(54) **Verfahren zur Synchronisation von wenigstens zwei Schreib-/Lesestationen sowie Schreib-/Lesestation zur Durchführung des Verfahrens**
Method for synchronising at least two write/read stations and write/read station for carrying out the method
Procédé destiné à la synchronisation d'au moins deux stations d'écriture/de lecture et station d'écriture/de lecture destinée à la mise en oeuvre du procédé

(30) Priorität: 07.10.2005 DE 102005048478
(43) Veröffentlichungstag der Anmeldung: 11.04.2007
(73) Patentinhaber: Feig Electronic GmbH, 35781 Weilburg-Waldhausen (DE)
(72) Erfinder: Desch, Markus, 65527 Niedernhausen (DE)
(74) Vertreter: Knefel, Cordula

(56) Entgegenhaltungen:
- US-A1- 2005 099 269
- "Electromagnetic compatibility and Radio spectrum Matters (ERM); Radio Frequency Identification Equipment operating in the band 865 MHz to 868 MHz with power levels up to 2 W; Part 1: Technical requirements and methods of measurement; ETSI EN 302 208-1" ETSI STANDARDS, LIS, Bd. ERM-TG34, Nr. V1.1.1, 1. September 2004 (2004-09-01), XP014015356 ISSN: 0000-0001

## Beschreibung

Die Erfindung betrifft ein Verfahren zur Synchronisation von wenigstens zwei Schreib-/Lesestationen. Die Schreib-/Lesestationen gehören zu einem RFID-System.

Gemäß dem Stand der Technik stehen im Bereich von UHF-RFID-Systemen innerhalb eines Frequenzbandes, welches zum Betrieb von UHF-RFID-Systemen vorgesehen ist, zumeist mehrere Kanäle zum Informationsaustausch zwischen Transponder und Schreib-/Lesestation zur Verfügung. Unter dem Begriff "Kanal" wird hierbei ein Teilfrequenzband eines Gesamtfrequenzbandes verstanden, wobei die Anzahl und Frequenzbandbreite eines Kanals anwendungsspezifisch variieren kann oder durch Funkvorschriften vorgegeben wird.

In Europa stehen für UHF-RFID-Systeme nach der geltenden Funkvorschrift ETSI EN 302 208-1 V1.1.1 (2004-09) maximal 15 Kanäle zur Verfügung, wobei nur zehn Kanäle für Schreib-/Lesestationen mit hoher Sendeleistung beziehungsweise Kommunikationsreichweite mit dem Transponder genutzt werden können. Will eine Schreib-/Lesestation einen dieser Kanäle nutzen, so wird durch die europäische Funkvorschrift vorgeschrieben, dass die Schreib-/Lesestation vor der Nutzung des Kanals prüfen muss, ob der Kanal von keinem anderen Sendesystem als einem UHF-RFID-System zu diesem Zeitpunkt genutzt wird. Auch wenn eine Schreib-/Lesestation bereits einen Kanal nutzt, muss sie ihren Sendevorgang nach einer bestimmten Zeit für eine definierte Mindestperiode unterbrechen (listen Window), damit auch nicht UHF-RFID-Systemen die Möglichkeit gegeben wird, auf diesem Kanal zu kommunizieren. Bevor eine Schreib-/Lesestation ihren Sendevorgang wieder aufnehmen darf, muss die Schreib-/Lesestation prüfen, ob dieser Kanal nicht zwischenzeitlich durch ein anderes Sendesystem genutzt wird. Stellt die Schreib-/Lesestation die Nutzung des Kanals durch ein anderes Sendesystem fest, so darf sie nicht mehr auf diesem Kanal senden, sondern muss sich einen anderen freien Kanal suchen. Steht kein freier Kanal zum Senden zur Verfügung, ist die Schreib-/Lesestation nicht in der Lage, ihren Betrieb weiterzuführen, um mit Transpondern zu kommunizieren.

Damit ein Sendekanal von mehreren Schreib-/Lesestationen, die sich in räumlicher Nähe zueinander befinden, für eine gewisse zufällige Zeitspanne gleichzeitig genutzt werden darf, muss gewährleistet sein, dass diese Schreib-/Lesestationen mindestens für die von der Funkvorschrift vorgeschriebene Zeitspanne gleichzeitig nicht senden. Eine solche Schreib-/Lesestation nach dem Stand der Technik, die in der Lage ist, gleichzeitig mit einer zweiten Schreib-/Lesestation auf demselben Kanal zu senden, verfügt in ihrer einfachsten Ausführungsform über eine Sendeeinheit und eine Empfangseinheit. Da die Rückantwort eines Transponders in dem Fall, dass mehrere Schreib-/Lesestationen denselben Sendekanal nutzen, nicht auf dem Sendekanal, sondern auf einem anderen Kanal übertragen wird, muss die Empfangseinheit einer Schreib-/Lesestation nach dem Stand der Technik so ausgelegt sein, dass sie mindestens einen zum Sendekanal unterschiedlichen Kanal zum Empfang nutzen kann. Eine solche zum Stand der Technik zählende Schreib-/Lesestation ist aus der europäischen Patentanmeldung EP 1 619 601 A1 bekannt.

Damit das listen Window aller benachbarten Schreib-/Lesestationen, die einen gemeinsamen Sendekanal verwenden, gleichzeitig startet, muss mindestens der Beginn des listen Windows dieser Schreib-/Lesestationen synchronisiert werden.

Ferner muss gewährleistet sein, dass eine Schreib-/Lesestation frühestens nach Ablauf der als listen Window bezeichneten vorgeschriebenen Sendeunterbrechung wieder auf dem Sendekanal sendet, sofern sie zuvor geprüft hat, ob kein anderes Sendesystem, beispielsweise ein Short Range Device (SRD) zwischenzeitlich auf dem gewählten Sendekanal sendet.

Ferner muss in der Praxis der gleichzeitige Betrieb von stationären und mobilen Schreib-/Lesestationen in räumlicher Nähe zueinander gewährleistet sein. Aufgrund dieser Anforderung ist die Synchronisation des listen Windows über ein Leitungsnetzwerk nicht möglich. Eine Synchronisation des listen Windows zwischen unterschiedlichen stationären und mobilen Schreib-/Lesestationen über ein weiteres drahtloses Funknetzwerk ist zwar möglich, setzt aber zusätzliche aufwändige Hardware voraus. Unabhängig davon, ob die Synchronisation über ein zusätzliches Leitungsnetz und ein Funknetz erfolgen würde, müssen alle Schreib-/Lesestationen in irgendeiner Form bei diesem Netzwerk angemeldet oder angeschlossen werden, was im Extremfall ein flächendeckendes Netzwerk zur Synchronisation aller Schreib-/Lesestationen in einem großen Gebiet notwendig machen würde, wenn beispielsweise voneinander unabhängige Einrichtungen, wie eine Spedition und ein in der Nähe befindlicher Supermarkt jeweils Schreib-/Lesestationen betreiben und diese Schreib-/Lesestationen die Sendesignale der nicht zu ihrer Einrichtung gehörenden Schreib-/Lesestationen empfangen würden, was aufgrund der notwendigen Sendeleistung und Empfangsempfindlichkeit von Schreib-/Lesestationen für passive RFID-Transponder üblich ist.

Damit die Summe der Sendeleistung räumlich dicht zueinander angeordneter Schreib-/Lesestationen ein definiertes Limit nicht überschreitet, ist es ferner sinnvoll und üblich, dass die Schreib-/Lesestationen einen Sendevorgang zur Abfrage eines in ihrem Lesebereich befindlichen passiven RFID-Transponders nur dann beginnen, wenn sie durch ein externes Ereignis (Triggerimpuls), wie beispielsweise ein Lichtschrankensignal oder eine Tastenbetätigung dazu aufgefordert werden.

Bei der Problemlösung ist zu beachten, dass die einzelnen Schreib-/Lesestationen bedingt durch ihre räumliche Anordnung nur die Sendesignale von mehr oder weniger benachbarten Schreib-/Lesestationen empfangen können. Hieraus ergibt sich, dass jede Schreib-/Lesestation ein anderes Umfeld empfängt. Sind die Schreib-/Lesestationen beispielsweise an den Toren unterschiedlicher benachbarter Gebäude montiert, so wird es vorkommen, dass eine Schreib-/Lesestation einige der im eigenen Gebäude montierten Schreib-/Lesestationen empfängt und zudem vereinzelte Schreib-/Lesestationen aus dem benachbarten Gebäude, während eine andere Schreib-/Lesestation im selben Gebäude unter Umständen wieder einzelne Schreib-/Lesestationen aus dem zu ihr näher gelegenen benachbarten Gebäude empfängt.

Hat die Schreib-/Lesestation Kenntnis davon, seit wann und auf welchem Sendekanal bereits eine andere Schreib-/Lesestation sendet, kann die Schreib-/Lesestation entscheiden, ob und wie lange sie diesen Sendekanal ebenfalls gemeinsam mit der anderen Schreib-/Lesestation verwenden kann.

In der europäischen Patentanmeldung EP 1 686 506 A1 sind bereits Verfahren beschrieben, wie die Sendevorgänge von generell in räumlicher Nähe angeordneten stationären und/oder mobilen Schreib-/Lesestationen eines RFID-Systems synchronisiert werden können. Die dort beschriebenen Verfahren haben allerdings den Nachteil, dass entweder eine zusätzliche Vernetzung der Schreib-/Lesestation notwendig ist oder ein Sendevorgang, der aufgrund eines externen Ereignisses starten soll, erst nach Ablauf eines vollen Sendezyklus, bestehend aus Sendevorgang und listen Window, starten kann.

Das der Erfindung zugrunde liegende technische Problem besteht darin, ein Verfahren anzugeben, gemäß dem die Sendevorgänge von in räumlicher Nähe angeordneten stationären und/oder mobilen Schreib-/Lesestationen eines RFID-Systems ohne ein zusätzliches Netzwerk synchronisiert werden, derart, dass sie einen gemeinsamen Sendekanal nutzen können, aber gleichzeitig auch sichergestellt ist, dass die Schreib-/Lesestationen mindestens für eine vorgeschriebene Zeitspanne (listen Window) gleichzeitig nicht senden und der Sendevorgang nach Eintritt eines externen Ereignisses (Triggerimpuls) möglichst schnell beginnt.

Dieses technische Problem wird durch ein Verfahren mit den Merkmalen gemäß Anspruch 1 gelöst.

Gemäß der Erfindung wird ein Verfahren zur Synchronisation von wenigstens zwei Schreib-/Lesestationen angegeben, für die wenigstens ein gemeinsamer Sendekanal zur Kommunikation von einer Schreib-/Lesestation zu jeweils wenigstens einem Transponder (Sendevorgang) vorhanden ist, und für die wenigstens ein zweiter Kanal (Empfangskanal) zur Kommunikation von dem jeweils wenigstens einen Transponder zu der jeweiligen Schreib-/Lesestation vorhanden ist, und bei dem jede Schreib-/Lesestation die Belegung wenigstens eines Sendekanals ermittelt und allen Schreib-/Lesestationen die maximale Dauer eines Sendevorganges und die minimale Dauer einer Sendeunterbrechung (listen Window) bekannt ist, wobei alle Schreib-/Lesestationen, die einen Sendevorgang auf einem bis dahin freien Kanal beginnen, einen allen Schreib-/Lesestationen bekannten Reader-Code senden, und wobei alle Schreib-/Lesestationen den Zeitpunkt registrieren, zu dem wenigstens eine andere Schreib-/Lesestation einen Sendevorgang auf wenigstens einem Sendekanal begonnen hat.

Vorteilhaft erfassen die Schreib-/Lesestationen, ob die wenigstens eine weitere Schreib-/Lesestation den Sendevorgang auf dem Kanal beendet hat. Sendet die erste Schreib-/Lesestation nämlich nicht während der gesamten maximal möglichen Sendedauer, sondern nur während der tatsächlich benötigten Zeit, kann es vorkommen, dass sämtliche Schreib-/Lesestationen auf einem Kanal vor der maximal möglichen Sendedauer aufgehört haben zu senden. Möchte nun eine weitere Schreib-/Lesestation auf diesem Kanal senden, registriert sie, dass alle anderen Schreib-/Lesestationen mit dem Senden aufgehört haben. Damit keine Kollision mit einem anderen Sendesystem (Short Range Device), das eventuell nach dem Beenden der Sendevorgänge aller anderen Schreib-/Lesestationen auf diesem Kanal mit dem Senden begonnen hat, auftritt, wartet die Schreib-/Lesestation vorteilhaft das nächste listen Window ab, bis sie mit einem Sendevorgang auf diesem Kanal beginnt. Diesen Sendevorgang startet sie wieder mit dem Senden des Reader-Codes.

Unter dem Begriff "Sendevorgang" ist hierbei das Senden der zur Energie- und Datenübertragung von der Schreib-/Lesestation zum passiven RFID-Transponder verwendeten Trägerfrequenz zu verstehen.

Das Verfahren setzt voraus, dass allen Schreib-/Lesestationen die maximale Dauer eines Sendevorganges und die minimale Dauer einer Sendeunterbrechung (listen Window) bekannt ist.

Gemäß der Erfindung sind die Schreib-/Lesestationen dabei autark, das heißt nicht untereinander vernetzt ausgebildet.

Da der Sendevorgang zur Abfrage eines vermeintlich im Lesebereich befindlichen Transponders nach einem Triggerimpuls möglichst unverzüglich starten soll, ist es notwendig, dass eine Schreib-/Lesestation bereits vor Eintritt des Triggerimpulses ermittelt hat, ob und welcher Kanal zum Senden verfügbar ist, und seit wann und auf welchem Kanal bereits eine andere Schreib-/Lesestation sendet.

Im Ausgangszustand ist der Sender der erfindungsgemäßen Schreib-/Lesestation inaktiv, aber deren Empfänger aktiv und so eingestellt, dass sie mindestens einen ersten Kanal, auf dem die Schreib-/Lesestation bevorzugt senden soll, hinsichtlich einer Belegung durch ein anderes Sendesystem oder eine andere Schreib-/Lesestation detektieren kann (Hörvorgang).

Während des Hörvorganges registriert die Schreib-/Lesestation die Signalstärke des von der Empfangseinheit empfangenen Signals und den Zeitpunkt, wann das Empfangssignal begonnen hat.

Damit eine Schreib-/Lesestation das Sendesignal einer anderen Schreib-/Lesestation von dem Sendesignal eines anderen Sendesystems unterscheiden kann, sendet eine Schreib-/Lesestation erfindungsgemäß zu Beginn ihres Sendevorgangs eine Codierung (Reader-Code), die sie als Schreib-/Lesestation identifiziert. Insbesondere wenn die Schreib-/Lesestation den Reader-Code einer weiteren Schreib-/Lesestation empfangen hat, registriert sie den Zeitpunkt des Empfanges des Reader-Codes, um daraus abzuleiten, ob und für welchen Zeitraum sie im Bedarfsfall, beispielsweise nach Anforderung durch einen Triggerimpuls, diesen Sendekanal gemeinsam mit der anderen Schreib-/Lesestation nutzen kann.

Der Reader-Code ist vorteilhaft für alle Schreib-/Lesestationen identisch und wird in seiner einfachsten Ausführungsform aus einem kurzen Sendepuls, gefolgt von einer kurzen Sendepause gebildet. Die Dauer des Sendepulses und der Sendepause können beispielsweise die gleiche Länge von je 5 Millisekunden (ms) aufweisen, können aber auch eine unterschiedliche Dauer im Bereich weniger Millisekunden aufweisen.

In einer vorteilhaften Ausführungsform kann die Schreib-/Lesestation ihren Empfänger so einstellen, dass während des Hörvorgangs neben dem bevorzugten ersten Sendekanal gleichzeitig mindestens ein weiterer zweiter Kanal hinsichtlich einer Belegung durch ein anderes Sendesystem oder eine andere Schreib-/Lesestation detektiert werden kann. Dies ermöglicht es der Schreib-/Lesestation, schnell auf einen zweiten Sendekanal auszuweichen, falls der bevorzugte erste Sendekanal durch ein weiteres Sendesystem belegt ist.

Weiterhin hat diese Ausführungsform den Vorteil, dass eine Schreib-/Lesestation schnell wieder auf ihren bevorzugten ersten Sendekanal zurückwechseln kann, um bei dem nächsten Sendevorgang wieder auf dem bevorzugten ersten Sendekanal senden zu können und somit möglichst wenige Sendekanäle durch das RFID-System zu belegen, da sie während des Sendevorganges auf einem Ausweichkanal den Belegungszustand ihres bevorzugten Sendekanals überwachen kann.

Vorteilhaft überprüfen alle Schreib-/Lesestationen die Belegung mindestens eines bevorzugten Sendekanals. Die Überprüfung eines bevorzugten Sendekanals ist vorteilhaft, damit Schreib-/Lesestationen, die in räumlicher Nähe zueinander angeordnet sind, nur ein möglichst schmales Frequenzspektrum nutzen und abstrahlen, um die Beeinflussung anderer Sendedienste möglichst gering zu halten. Ferner bleiben hierdurch möglichst viele Sendekanäle frei, auf die eine Schreib-/Lesestation schneller ausweichen kann, falls der bevorzugte erste Sendekanal durch ein weiteres Sendesystem belegt ist.

Gemäß einer weiteren vorteilhaften Ausführungsform des erfindungsgemäßen Verfahrens überprüft die wenigstens eine Schreib-/Lesestation in der Zeit, in der sie keinen Sendevorgang ausführt, die Belegung mindestens eines Sendekanals. Hierdurch ist gewährleistet, dass die Schreib-/Lesestation unmittelbar, wenn sie einen Triggerimpuls zum Senden erhält, mit dem Sendevorgang beginnen kann.

Eine weitere vorteilhafte Ausführungsform des erfindungsgemäßen Verfahrens sieht vor, dass die wenigstens eine Schreib-/Lesestation eine verbleibende Sendedauer aus dem registrierten Beginn eines Sendevorganges einer weiteren Schreib-/Lesestation und der maximalen Sendedauer bestimmt. Hierdurch kann die Schreib-/Lesestation, die einen Sendevorgang auf einem Sendekanal, der schon von einer weiteren Schreib-/Lesestation genutzt wird, beginnen möchte, ermitteln, ob die verbleibende Sendedauer ausreicht, um den Sendeauftrag auszuführen.

Gemäß der Erfindung ist es möglich, dass die wenigstens zwei Schreib-/Lesestationen auf wenigstens einem Sendekanal gleichzeitig senden. Hierdurch ist gewährleistet, dass möglichst wenige Sendekanäle von den Schreib-/Lesestationen belegt werden.

In einer weiteren vorteilhaften Ausführungsform der Erfindung kann die Schreib-/Lesestation während des Sendevorganges gleichzeitig über einen zusätzlichen Empfänger (Listen-before-Talk-Receiver (LBT-Receiver)) auf mindestens einem weiteren Kanal den Belegungszustand durch ein anderes Sendesystem oder eine andere Schreib-/Lesestation detektieren. Dies ermöglicht einen schnellen Wechsel des Sendekanals, da die Schreib-/Lesestation bereits vor dem Ende des eigenen Sendevorganges den Belegungszustand eines möglichen Ausweichkanals ermitteln und direkt zu diesem Ausweichkanal wechseln kann, falls ein anderes Sendesystem während der Sendeunterbrechung den bevorzugten Sendekanal der Schreib-/Lesestation belegt.

Unabhängig von der Hardwareausprägung der Schreib-/Lesestation sind bei dem erfindungsgemäßen Verfahren folgende Schritte vorgesehen:
1. Hat eine Schreib-/Lesestation einen Triggerimpuls zum Senden erhalten und detektiert, dass der von ihr bevorzugte Sendekanal für das definierte listen Window nicht durch einen anderen beliebigen Sender belegt war, startet sie unverzüglich ihren Sendevorgang und sendet zu Beginn des Sendevorganges den Reader-Code, der sie als Schreib-/Lesestation identifiziert.
2. Erhalten zwei oder mehrere Schreib-/Lesestationen zum selben Zeitpunkt einen Triggerimpuls und haben detektiert, dass der von ihnen bevorzugte Sendekanal für das definierte listen Window nicht durch einen anderen beliebigen Sender belegt war, starten diese Schreib-/Lesestationen zum selben Zeitpunkt ihren Sendevorgang und senden jeweils zu Beginn des Sendevorganges den Reader-Code, der sie als Schreib-/Lesestationen identifiziert. In diesem Fall senden diese Schreib-/Lesestationen synchron auf demselben Kanal.
3. Erhält eine erste Schreib-/Lesestation über einen Triggerimpuls den Auftrag zum Senden und hat im Vorfeld detektiert, dass auf dem von ihr bevorzugten ersten Sendekanal bereits eine zweite Schreib-/Lesestation sendet, und zu welchem Zeitpunkt der Sendevorgang der zweiten Schreib-/Lesestation begonnen hat, kann die erste Schreib-/Lesestation ihren Sendevorgang unverzüglich auf diesem ersten Sendekanal starten, ohne dabei den Reader-Code einer Schreib-/Lesestation zu senden. Sie muss den Sendevorgang aber spätestens dann beenden, wenn die maximal zulässige Sendedauer der zweiten Schreib-/Lesestation erreicht wird. Hierdurch wird sichergestellt, dass die erste und die zweite Schreib-/Lesestation zum selben Zeitpunkt während des listen Windows nicht senden und damit synchron das definierte listen Window einhalten, ohne dass die einzelnen Schreib-/Lesestationen hierzu in ein zusätzliches Netzwerk zur Synchronisation der Hörvorgänge eingebunden werden müssen.

Durch diese Verfahrensschritte ist zudem gewährleistet, dass eine Schreib-/Lesestation nur kurzzeitig auf einen zweiten Sendekanal ausweicht und Schreib-/Lesestationen, die in räumlicher Nähe zueinander angeordnet sind, synchron auf dem bevorzugten ersten Sendekanal arbeiten.

Dieses Verfahren ist mit Schreib-/Lesestationen nach dem Stand der Technik wie diese beispielsweise in der europäischen Patentanmeldung EP 1 619 601 A1 beschrieben sind, ohne zusätzlichen Hardwareaufwand durch Implementierung zusätzlicher Softwarefunktionen ausführbar.

Eine Schreib-/Lesestation zur Durchführung des erfindungsgemäßen Verfahrens kann als eine zu Beginn eines Sendevorganges einen Reader-Code sendende Schreib-/Lesestation ausgebildet sein. Durch den Reader-Code identifiziert sich die Schreib-/Lesestation, so dass weitere Schreib-/Lesestationen erkennen können, ob ein Sendekanal von einer Schreib-/Lesestation oder einem anderen Sendesystem (Short Range Device) belegt ist.

Die Schreib-/Lesestation kann eine Einrichtung zum Erzeugen des Reader-Codes aufweisen, die als Softwarefunktion, als Hardwarefunktion oder als Kombination aus Software- und Hardwarefunktion ausgeführt ist. Ist die Einrichtung als Softwarefunktion ausgebildet, hat dies den Vorteil, dass eine zum Stand der Technik gehörende Schreib-/Lesestation verwendet werden kann, und dass lediglich die Software implementiert werden muss, ohne die Schreib-/Lesestation hardwaremäßig zu verändern.

Die Schreib-/Lesestation kann als eine den Reader-Code empfangende und den Zeitpunkt des Beginns des wenigstens einen Sendevorganges wenigstens einer weiteren Schreib-/Lesestation registrierende Schreib-/Lesestation ausgebildet sein. Hierdurch ist es möglich, dass die Schreib-/ Lesestation ständig überwacht, ob ein Sendekanal von einer weiteren Schreib-/Lesestation belegt ist.

Vorteilhaft ist die Schreib-/Lesestation als eine den Reader-Code empfangende und den Zeitpunkt des Endes des wenigstens einen Sendevorganges aller weiteren Schreib-/Lesestationen registrierende Schreib-/Lesestation ausgebildet, damit die Schreib-/Lesestation erfassen kann, ob der Kanal, auf dem sie senden möchte, noch von wenigstens einer Schreib-/Lesestation belegt ist, oder ob alle Schreib-/Lesestationen aufgehört haben zu senden. In diesem Fall muss die Schreib-/Lesestation das listen Window abwarten, um auf diesem Kanal senden zu können, da ansonsten die Möglichkeit besteht, dass nach dem Beenden sämtlicher Sendevorgänge auf diesem Kanal ein Sendesystem (Short Range Device) mit dem Senden auf diesem Kanal begonnen hat. Es ist dann der Schreib-/Lesestation nicht erlaubt, diesen Kanal zusätzlich zu dem Sendesystem zu belegen.

Vorteilhaft weist die Schreib-/Lesestation eine Einrichtung zur Registrierung des Zeitpunktes auf, zu dem ein Reader-Code empfangen wurde, wobei die Einrichtung als Softwarefunktion, als Hardwarefunktion oder als Kombination aus Software- und Hardwarefunktionen ausgeführt ist. Hierdurch ist es möglich, zum Stand der Technik gehörende Schreib-/Lesestationen durch Implementieren der entsprechenden Software für das erfindungsgemäße Verfahren einzusetzen.

Die Schreib-/Lesestation kann als eine zwischen den Antennen und einem LBT-Receiver oder der Signalverteilvorrichtung wahlfrei umschaltbare Schreib-/Lesestation ausgebildet sein.

Diese Ausführungsform hat den Vorteil, dass jederzeit eine andere Antenne für die Kommunikation mit einem Transponder oder die Registrierung belegter oder freier Kanäle ausgewählt werden kann, was beispielsweise beim Einsatz eines Antennen-Gates, bei dem mehrere Antennen neben oder über einem Tor angeordnet sind, vorteilhaft ist, um möglichst alle Transponder, die durch das Tor transportiert werden, erfassen zu können, während über eine andere Antenne des Antennen-Gates freie Ausweichkanäle gesucht werden können.

Weitere Merkmale und Vorteile der Erfindung ergeben sich anhand der zugehörigen Zeichnung, in der ein Ausführungsbeispiel des erfindungsgemäßen Verfahrens und mögliche Ausführungsformen einer Schreib-/Lesestation zur Ausführung des Verfahrens beispielhaft dargestellt sind. In der Zeichnung zeigen:
- Fig. 1: schematisch die zeitlichen Bedingungen zur Durchführung des erfindungsgemäßen Verfahrens;
- Fig. 2: einen möglichen Reader-Code;
- Fig. 3: zeitliche Abläufe von Sende- und Empfangsvorgängen;
- Fig. 4: ein Prinzipschaltbild einer Schreib-/Lesestation;
- Fig. 5: ein Prinzipschaltbild einer weiteren Ausführungsform einer Schreib-/Lesestation mit einem Multischalter.

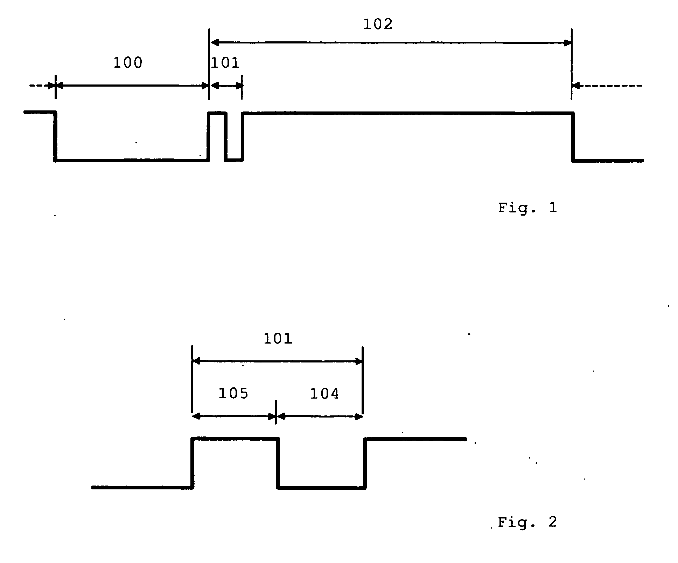

Fig. 1 stellt schematisch die zeitlichen Bedingungen zur Durchführung des erfindungsgemäßen Verfahrens dar. Hierbei ist die Zeitspanne 100 die als "listen Window" bezeichnete Sendeunterbrechung, in der keine Schreib-/Lesestation auf dem betreffenden Sendekanal senden darf. Die Zeitspanne 101 stellt beispielhaft den Reader-Code dar, den eine Schreib-/Lesestation sendet, wenn sie nach dem Ende des listen Windows ihren Sendevorgang startet. Die Zeitspanne 102 stellt die maximal zulässige Sendedauer dar, für die ein Sendekanal insgesamt für Sendevorgänge belegt werden darf. Spätestens nach Ablauf der maximalen Sendedauer 102 müssen alle Schreib-/Lesestationen ihren Sendevorgang auf diesem Kanal beenden.

Fig. 2 stellt beispielhaft den Aufbau eines möglichen Reader-Codes dar, der in diesem Beispiel aus einem kurzen Sendepuls 105 und einer darauffolgenden Sendeunterbrechung 104 besteht.

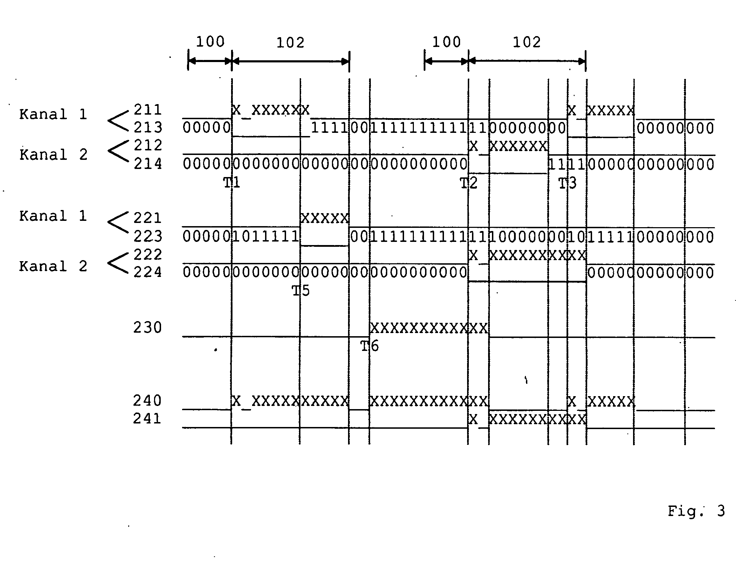

Fig. 3 zeigt anhand von symbolisierten zeitlichen Abläufen die Funktionsweise des erfindungsgemäßen Verfahrens anhand einiger Sendesequenzen von zwei Schreib-/Lesestationen und einem SRD (Short Range Device). Bei Sendevorgängen der Schreib-/Lesestationen 211, 212, 221, 222 und des SRD 230 zeigt das Symbol "X" einen aktiven Sendevorgang, während das Symbol "_" " für eine Sendeunterbrechung steht. Während eines Hörvorgangs auf einem Kanal 213, 214, 223, 224 zeigt das Symbol "0", dass eine Schreib-/Lesestation den betreffenden Kanal als frei detektiert hat, während das Symbol "1" anzeigt, dass der Kanal zu diesem Zeitpunkt als belegt detektiert wurde. Während eines Hörvorgangs 213, 214, 223, 224 zeigt das Symbol "_" an, dass die Schreib-/Lesestation zu diesem Zeitpunkt keine Detektion auf dem jeweiligen Kanal durchführen muss, da der Kanal durch einen eigenen Sendevorgang belegt ist.

Zum Zeitpunkt T1 erhält eine erste Schreib-/Lesestation einen Triggerimpuls zum Senden. Da sie zuvor detektiert hat, dass ihr bevorzugter Sendekanal 1 für die Dauer des listen Windows 100 frei war, beginnt sie unverzüglich ihren Sendevorgang auf Sendekanal 1, wobei sie zunächst einen Reader-Code 101 sendet. Nachdem die Kommunikation mit dem oder den Transpondern beendet wurde, beendet sie ihren Sendevorgang bereits vor Ablauf der maximalen Sendedauer 102.

Zum Zeitpunkt T5 erhält eine zweite Schreib-/Lesestation einen Triggerimpuls zum Senden. Da die zweite Schreib-/Lesestation permanent den Zustand von Sendekanal 1 und Sendekanal 2 überwacht hat, ist ihr der Zeitpunkt bekannt, zu dem die erste Schreib-/Lesestation einen Sendevorgang auf dem Sendekanal 1 gestartet hat, und sie hat ferner anhand des von der ersten Schreib-/Lesestation gesendeten Reader-Codes erkannt, dass auf Sendekanal 1 eine weitere Schreib-/Lesestation sendet. Aufgrund der Kenntnis, dass Sendevorgänge auf einem Kanal nach der maximalen Sendedauer 102 beendet werden müssen, beginnt die zweite Schreib-/Lesestation unverzüglich ihren Sendevorgang auf dem Sendekanal 1 mit dem Sendesignal 221 und beendet den Sendevorgang in diesem Beispiel, wenn die maximale Sendedauer 102 erreicht wurde.

Zum Zeitpunkt T2 erhalten beide Schreib-/Lesestationen zeitgleich einen Triggerimpuls zum Senden. Da beide Schreib-/Lesestationen zuvor detektiert haben, dass ihr bevorzugter Sendekanal 1 seit dem Zeitpunkt T6 durch ein anderes Sendesystem, beispielsweise ein Short Range Device (SRD), belegt ist, weichen beide Schreib-/Lesestationen auf den Sendekanal 2 aus, von dem sie zuvor ermittelt haben, dass er mindestens für die Dauer des listen Windows 100 frei war. Da beide Schreib-/Lesestationen zeitgleich ihren Sendevorgang 212, 222 auf dem bis dahin freien Sendekanal 2 beginnen, senden beide Schreib-/Lesestationen zeitgleich den Reader-Code 101. Die Sendevorgänge beider Schreib-/Lesestationen dauern jedoch unterschiedlich lang, wobei der Sendevorgang der ersten Schreib-/Lesestation bereits vor Ablauf der maximalen Sendedauer 102 beendet ist.

Zum Zeitpunkt T3 erhält die erste Schreib-/Lesestation erneut einen Sendeauftrag. Da die erste Schreib-/Lesestation bereits im Vorfeld ermittelt hat, dass die verbleibende maximale Sendedauer 102 auf Kanal 2 nur noch recht kurz ist, aber der von ihr bevorzugte Sendekanal 1 mindestens für die Dauer des listen Windows 100 frei war, startet sie ihren Sendevorgang unmittelbar auf dem Sendekanal 1 und sendet zu Beginn den Reader-Code 101.

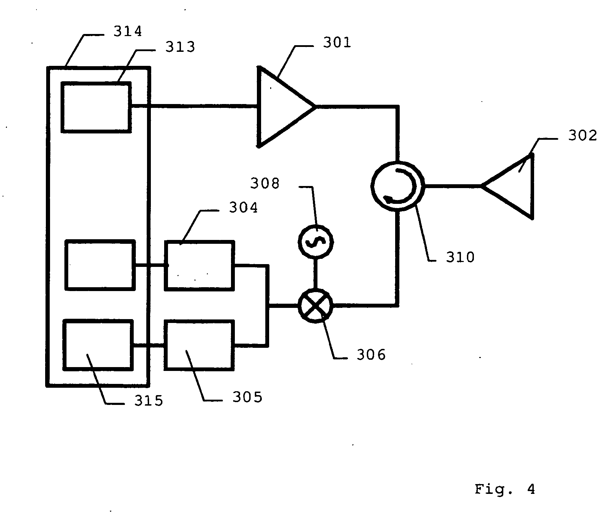

Fig. 4 zeigt das Prinzipschaltbild einer Schreib-/Lesestation in einer einfachen Ausführungsform, die zur Kommunikation mit Transpondern auf einem Kommunikationskanal 1, 2 und zum gleichzeitigen oder auch zeitversetzten Überwachen anderer Kommunikationskanäle auf deren Belegung hin ausgelegt ist.

Bei der in Fig. 4 dargestellten Schreib-/Lesestation wird das Sendesignal von einem Sendesignalgenerator 313 erzeugt, über einen Verstärker 301 verstärkt und anschließend an eine mehrtorige Signalverteilvorrichtung 310 mit mindestens drei Toren geführt, die das Sendesignal relativ ungehindert an eine Antenne 302 durchleitet, aber nur zu einem geringen Teil an einen Mischer 306 gelangen lässt, während ein Empfangssignal von der Antenne 302 relativ ungehindert an den Mischer 306 gelangen kann. Eine solche Signalverteilvorrichtung 310 kann beispielsweise als ein Richtkoppler oder als ein Zirkulator ausgebildet sein.

Der Sendesignalgenerator 313 generiert die Sendedaten, die von der Schreib-/Lesestation zu einem Transponder gesendet werden sollen, und er generiert den Reader-Code, den eine Schreib-/Lesestation zu Beginn eines Sendevorgangs auf einem bis dahin freien Kanal aussendet. Dazu kann der Sendesignalgenerator 313 als Softwarefunktion in einer Auswerte- und Steuereinheit 314 integriert sein, er kann aber auch als Hardwaremodul oder als Kombination aus Hard- und Softwarefunktionen ausgeführt werden.

Aufgabe der Auswerte- und Steuereinheit 314 ist, die Sende- und Empfangsvorgänge der Schreib-/Lesestation zu steuern, die zu sendenden Daten zu codieren, die Empfangsdaten zu decodieren und zu prüfen und zu registrieren, welcher Sendekanal zu welchem Zeitpunkt von einer weiteren Schreib-/Lesestation belegt wurde. Für die Registrierung des Zeitpunktes, wann ein Sendekanal von einer weiteren Schreib-/Lesestation belegt wurde, ist in die Auswerte- und Steuereinheit 314 eine Registriereinheit 315 integriert, die in einer möglichen Ausführungsform als Softwaremodul ausgeführt sein kann, aber auch als Hardwaremodul oder als eine Kombination aus Softwarefunktionen und Hardwarefunktionen realisiert werden kann.

In der in Fig. 4 beispielhaft dargestellten Schreib-/Lesestation gelangen die von der Antenne 302 empfangenen Empfangsdaten über die Signalverteilvorrichtung 310 relativ ungehindert an den Mischer 306, der als einfacher Mischer oder als Quadratur-Mischer (IQ-Mischer) ausgeführt ist. Er mischt das Empfangssignal mit der von einem Synthesizer 308 erzeugten Frequenz und führt das gemischte Signal an einen Datenempfänger 304 und an einen LBT-Receiver 305.

Die dargestellte Trennung von Datenempfänger 304 und LBT-Receiver 305 hat den Vorteil, dass der LBT-Receiver 305 so ausgelegt werden kann, dass er einen breiteren Frequenzbereich als der Datenempfänger 304 erfassen kann und damit in der Lage ist, auch Sendevorgänge auf benachbarten Kanälen zu erfassen.

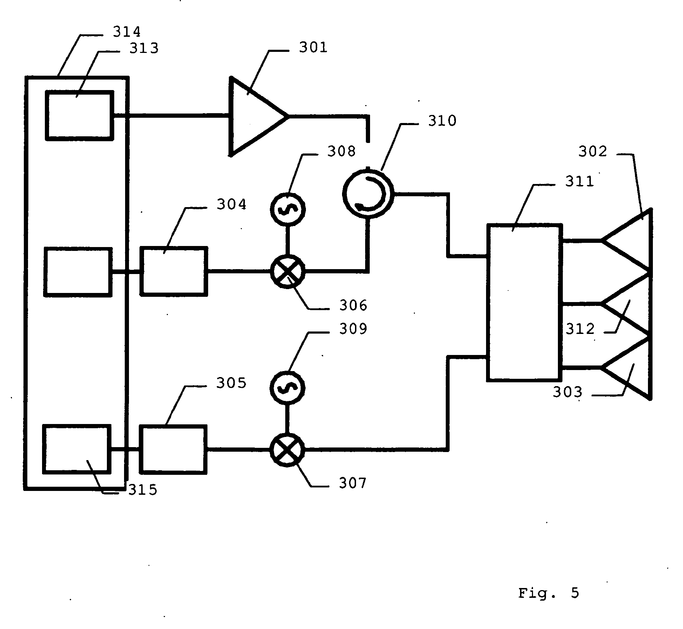

In Fig. 5. wird eine weitere Ausführungsform der Schreib-/Lesestation dargestellt, bei der über einen Mehrfachschalter 311 wahlweise eine Antenne 302, 303, 312 mit der Signalverteilvorrichtung 310 oder dem LBT-Receiver 305 verbunden werden kann. Der Mehrfachschalter 311 kann dabei, wie dargestellt, als ein Mehrfachschalter für drei Antennen 302, 303, 312 ausgeführt sein. Ebenso gut kann der Mehrfachschalter 311 auch für eine beliebige andere Anzahl von Antennen ausgeführt sein.

Diese Ausführungsform hat den Vorteil, dass jederzeit eine andere Antenne für die Kommunikation mit einem Transponder oder die Registrierung belegter oder freier Kanäle ausgewählt werden kann, was beispielsweise beim Einsatz eines Antennen-Gates, bei dem mehrere Antennen neben oder über einem Tor angeordnet sind, vorteilhaft ist, um möglichst alle Transponder, die durch das Tor transportiert werden, erfassen zu können, während über eine andere Antenne des Antennen-Gates freie Ausweichkanäle gesucht werden können.

### Bezugszahlen

- 1: Kanal
- 2: Kanal
- 100: listen Window
- 101: Reader-Code
- 102: maximale Sendedauer
- 104: Sendepause
- 105: Sendepuls
- 211: Sendesignal der ersten Schreib-/Lesestation auf Kanal 1
- 212: Sendesignal der ersten Schreib-/Lesestation auf Kanal 2
- 213: Empfangssignal der ersten Schreib-/Lesestation auf Kanal 1
- 214: Empfangssignal der ersten Schreib-/Lesestation auf Kanal 2
- 221: Sendesignal der zweiten Schreib-/Lesestation auf Kanal 1
- 222: Sendesignal der zweiten Schreib-/Lesestation auf Kanal 2
- 223: Empfangssignal der zweiten Schreib-/Lesestation auf Kanal 1
- 224: Empfangssignal der zweiten Schreib-/Lesestation auf Kanal 2
- 230: Short Range Device (SRD), sendet auf Kanal 1
- 240: Belegungszustand von Kanal 1
- 241: Belegungszustand von Kanal 2
- 301: Verstärker (linear oder logarithmisch)
- 302, 303, 312: Antenne
- 304: Datenempfänger
- 305: LBT-Receiver (Listen-before-Talk-Receiver)
- 306, 307: Mischer
- 308, 309: Synthesizer
- 310: Signalverteilvorrichtung
- 311: Mehrfachschalter
- 313: Sendesignalgenerator
- 314: Auswerte- und Steuereinheit
- 315: Registriereinheit
- T1: Zeitpunkt
- T2: Zeitpunkt
- T3: Zeitpunkt
- T5: Zeitpunkt
- T6: Zeitpunkt

## Patentansprüche

1. Verfahren zur Synchronisation von wenigstens zwei Schreib-/Lesestationen, für die wenigstens ein gemeinsamer Sendekanal zur Kommunikation von einer Schreib-/Lesestation zu jeweils wenigstens einem Transponder (Sendevorgang) vorhanden ist, und für die wenigstens ein zweiter Kanal (Empfangskanal) zur Kommunikation von dem jeweils wenigstens einen Transponder zu der jeweiligen Schreib-/Lesestation vorhanden ist, und bei dem jede Schreib-/Lesestation die Belegung wenigstens eines Sendekanals ermittelt und allen Schreib-/Lesestationen die maximale Dauer eines Sendevorganges und die minimale Dauer einer Sendeunterbrechung (listen Window) bekannt ist,
**dadurch gekennzeichnet, dass** alle Schreib-/Lesestationen, die einen Sendevorgang auf einem bis dahin freien Kanal (1, 2) beginnen, einen allen Schreib-/Lesestationen bekannten Reader-Code (101) senden und alle Schreib-/Lesestationen den oder die Zeitpunkte registrieren, zu dem oder denen wenigstens eine andere Schreib-/Lesestation einen Sendevorgang (211, 212, 221, 222) auf wenigstens einem Sendekanal (1, 2) begonnen hat.

2. Verfahren nach Anspruch 1, **dadurch gekennzeichnet, dass** alle Schreib-/Lesestationen detektieren, dass auf einem Sendekanal (1, 2) alle Schreib-/Lesestationen die Sendevorgänge auf dem Kanal beendet haben.

3. Verfahren nach Anspruch 1, **dadurch gekennzeichnet, dass** die Schreib-/Lesestationen einen einheitlichen Reader-Code (101) senden.

4. Verfahren nach Anspruch 1, **dadurch gekennzeichnet, dass** alle Schreib-/Lesestationen die Belegung mindestens eines bevorzugten Sendekanals (1, 2) überprüfen.

5. Verfahren nach Anspruch 1, **dadurch gekennzeichnet, dass** die wenigstens eine Schreib-/Lesestation in der Zeit, in der sie keinen Sendevorgang ausführt, die Belegung mindestens eines Sendekanals (1, 2) überprüft.

6. Verfahren nach Anspruch 1, **dadurch gekennzeichnet, dass** die wenigstens eine Schreib-/Lesestation eine verbleibende Sendedauer aus dem registrierten Beginn eines Sendevorganges einer weiteren Schreib-/Lesestation und der maximalen Sendedauer (102) bestimmt.

7. Verfahren nach Anspruch 1, **dadurch gekennzeichnet, dass** die wenigstens zwei Schreib-/Lesestationen auf wenigstens einem Sendekanal (1, 2) gleichzeitig senden.

8. Verfahren nach Anspruch 1, **dadurch gekennzeichnet, dass** eine Schreib-/Lesestation, die auf einem von einer zweiten Schreib-/Lesestation belegten Sendekanal (1) einen Sendevorgang beginnt, den Sendevorgang ohne Senden des Reader-Codes (101) beginnt.

9. Verfahren nach Anspruch 8, **dadurch gekennzeichnet, dass** die den Sendevorgang ohne Senden des Reader-Codes (101) beginnende Schreib-/Lesestation den Sendevorgang spätestens dann beendet, wenn die maximal zulässige Sendedauer (102) der Schreib-/Lesestation, die den Reader-Code (101) gesendet hat, erreicht ist.

10. Verfahren nach Anspruch 2, **dadurch gekennzeichnet, dass** eine Schreib-/Lesestation, die auf einem Kanal mit einem Sendevorgang beginnt, der von wenigstens einer anderen Schreib-/Lesestation belegt war, und auf dem sämtliche Sendevorgänge beendet sind, erst nach Abwarten eines listen Windows mit dem Sendevorgang beginnt.

## Claims

1. Method for synchronising at least two write/read stations, for which at least one common transmitting channel for communication of a write/read station with in each case at least one transponder (transmitting process) is provided, and for which at least one second channel (receiving channel) for communication of the in each case at least one transponder with the respective write/read station is provided, and in which each write/read station detects the occupancy of at least one transmitting channel, and the maximum duration of a transmitting process and the minimum duration of a transmitting interruption (listen window) are known to all the write/read stations,
**characterised in that** all the write/read stations which start a transmitting process on a hitherto free channel (1, 2) transmit a reader code (101) known to all the write/read stations, and all the write/read stations register the instant(s) at which at least one other write/read station has started a transmitting process (211, 212, 221, 222) on at least one transmitting channel (1, 2).

2. Method according to Claim 1, **characterised in that** all the write/read stations detect that on a transmitting channel (1, 2) all the write/read stations have ended the transmitting processes on the channel.

3. Method according to Claim 1, **characterised in that** the write/read stations transmit a uniform reader code (101).

4. Method according to Claim 1, **characterised in that** all the write/read stations check the occupancy of at least one preferred transmitting channel (1, 2).

5. Method according to Claim 1, **characterised in that** the at least one write/read station checks, in the time in which it does not carry out a transmitting process, the occupancy of at least one transmitting channel (1, 2).

6. Method according to Claim 1, **characterised in that** the at least one write/read station determines a remaining transmitting duration from the registered start of a transmitting process of a further write/read station and the maximum transmitting duration (102).

7. Method according to Claim 1, **characterised in that** the at least two write/read stations transmit on at least one transmitting channel (1, 2) simultaneously.

8. Method according to Claim 1, **characterised in that** a write/read station which starts a transmitting process on a transmitting channel (1) occupied by a second write/read station starts the transmitting process without transmitting the reader code (101).

9. Method according to Claim 8, **characterised in that** the write/read station which starts the transmitting process without transmitting the reader code (101) ends the transmitting process at the latest when the maximum permissible transmitting duration (102) of the write/read station which has sent the reader code (101) is reached.

10. Method according to Claim 2, **characterised in that** a write/read station which starts a transmitting process on a channel which was occupied by at least one other write/read station and on which all the transmitting processes have ended starts the transmitting process only after waiting for a listen window.

## Revendications

1. Procédé destiné à la synchronisation d'au moins deux stations d'écriture/lecture pour lesquelles au moins un canal d'émission commun pour la communication à partir d'une station d'écriture/lecture vers respectivement au moins un transpondeur (procédé d'émission) est présent, et pour lesquelles au moins un deuxième canal (canal de réception) pour la communication à partir du respectivement au moins un transpondeur vers la station d'écriture/lecture respective est présent, et dans lequel chaque station d'écriture/lecture fournit l'occupation d'au moins un canal d'émission et la durée maximale d'un procédé d'émission et la durée minimale d'une interruption d'émission (fenêtre d'écoute) sont connues par toutes les stations d'écriture/lecture,
**caractérisé en ce que** toutes les stations d'écriture/lecture qui commencent un procédé d'émission sur un canal qui était jusqu'à ce moment libre (1, 2) émettent un code de lecteur (101) connu par toutes les stations d'écriture/lecture et toutes les stations d'écriture/lecture enregistrent le ou les moment(s) où au moins une autre station d'écriture/lecture a débuté un procédé d'émission (211, 212, 221, 222) sur au moins un canal d'émission (1, 2).

2. Procédé selon la revendication 1, **caractérisé en ce que** toutes les stations d'écriture/lecture détectent le fait que, sur un canal d'émission (1, 2) toutes les stations d'écriture/lecture ont terminé les procédés d'émission sur le canal.

3. Procédé selon la revendication 1, **caractérisé en ce que** les stations d'écriture/lecture émettent un code de lecteur (101) unitaire.

4. Procédé selon la revendication 1, **caractérisé en ce que** toutes les stations d'écriture/lecture vérifient l'occupation d'au moins un canal d'émission (1, 2) préféré.

5. Procédé selon la revendication 1, **caractérisé en ce que** la au moins une station d'écriture/lecture vérifie, pendant le temps où elle ne réalise aucun procédé d'émission, l'occupation d'au moins un canal d'émission (1, 2).

6. Procédé selon la revendication 1, **caractérisé en ce que** la au moins une station d'écriture/lecture détermine une durée d'émission restante à partir du début enregistré d'un procédé d'émission d'une autre station d'écriture/lecture ainsi que la durée maximale d'émission (102).

7. Procédé selon la revendication 1, **caractérisé en ce que** les au moins deux stations d'écriture/lecture émettent simultanément sur au moins un canal d'émission (1, 2).

8. Procédé selon la revendication 1, **caractérisé en ce qu'**une station d'écriture/lecture qui commence un procédé d'émission sur un canal d'émission (1) occupé par une deuxième station d'écriture/lecture, commence le procédé d'émission sans émettre le code de lecteur (101).

9. Procédé selon la revendication 8, **caractérisé en ce que** la station d'écriture/lecture qui commence le procédé d'émission sans émettre de code de lecteur (101) termine le procédé d'émission au plus tard lorsque la durée maximale admissible d'émission (102) de la station d'écriture/lecture qui a émis le code de lecteur (101) s'est écoulée.

10. Procédé selon la revendication 2, **caractérisé en ce qu'**une station d'écriture/lecture qui commence un procédé d'émission sur un canal, qui était occupé par au moins une autre station d'écriture/lecture, et sur lequel tous les procédés d'émission sont terminés, ne commence le procédé d'émission qu'après avoir attendu une fenêtre d'écoute.
